# EUROPEAN PATENT SPECIFICATION

(11) **EP 3 951 257 B1**
(45) Date of publication and mention of the grant of the patent: **01.02.2023**
(21) Application number: 21189364.9
(22) Date of filing: 03.08.2021
(51) Int. Cl.: F21V 8/00

(54) **LIGHTING DEVICE**
BELEUCHTUNGSVORRICHTUNG
DISPOSITIF D'ÉCLAIRAGE

(30) Priority: 03.08.2020 ES 202030826
(43) Date of publication of application: 09.02.2022
(73) Proprietor: Seat, S.A., 08760 Martorell (ES)
(72) Inventor: VICENT FUENTES, Francisco Félix, Barcelona (ES); GURMENDI CULLA, Mikel, Barcelona (ES); EDEGGER, Paul, Barcelona (ES)
(74) Representative: Ponti & Partners, S.L.P

(56) References cited:
- DE-A1- 19 904 644
- US-A1- 2011 038 178
- US-A1- 2015 078 025
- US-A1- 2016 245 986

## Description

### Technical sector

The present invention concerns a lighting device, of a modular type, comprising one or more lighting modules, and more particularly a lighting device with coupling configurations arranged on the lighting module(s) which allow different lighting modules to be coupled together in such a way as to define a continuous light output surface.

### Prior state of the art

Lighting devices comprising the features of the preamble of claim 1 of the present invention are known, i.e. comprising at least one lighting module which in turn comprises:
- a light guide comprising a light entry zone, an internal light transmission zone and a light exit zone, optically communicating with each other along an optical path; and
- a coupling configuration of a first type and a coupling configuration of a second type, which is complementary to said coupling configuration of a first type, for the coupling of at least one adjacent lighting module comprising at least one of said coupling configurations of a first or a second type.

One such lighting device is disclosed by patent document US2004208016A1, which includes a plurality of lighting modules, each comprising an oval-shaped light guide, all light guides being coupled together to form a row.

In such a device, each of the light guides arranged at intermediate positions in the row includes at one end a coupling configuration of a first type consisting of a recess, and at its other end a coupling configuration of a second type consisting of the tip of the oval itself forming each light guide. Each oval tip of a light guide fits into the recess of the light guide which is arranged adjacent to it, coupled so that it can rotate freely along a given angular displacement (until adhesive is added on such coupling when the desired angular position is reached).

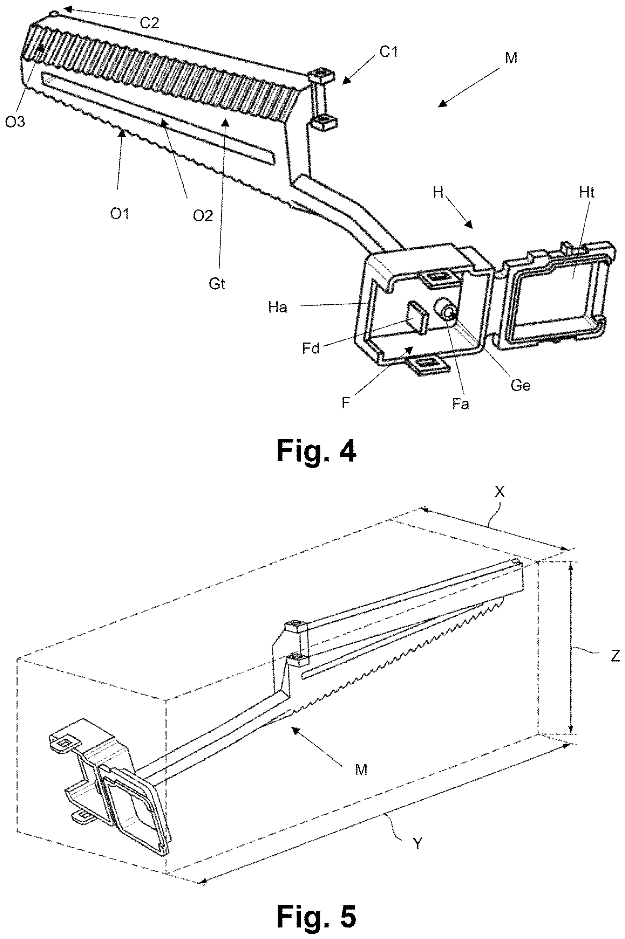

The light guide on the left-hand side of the row has the same coupling configurations as the intermediate ones, except that the one consisting of a recess is not coupled to another light guide but instead houses part of a light source to receive the light beams emitted by same. As regards the light guide arranged at the right-hand end of the row (as shown in figures 4A, 4B), in this case its two coupling configurations are constituted by recesses, the right-hand recess housing another light source to receive the light beams emitted by same.

A major limitation of the device proposed by US2004208016A1 is that the coupling configurations coincide with the focal points of the light, said coupling configurations serving both for light transmission between light guides and for light emission to the outside of the light guide. Consequently, the lighting modules of the intermediate light guides have no light sources of their own and must therefore use as their light source the light emitted by the adjacent light guide when converging at the respective focal point at which they are coupled to each other.

This makes the design and manufacture of such a light guide very difficult, as any variation in dimensions or shape that would cause the focal point to deviate from the coupling areas would result in the light not being transmitted properly through the intermediate light guides.

The interface between the concave and convex surfaces of each oval tip and each recess of two consecutive light guides is both a mechanical interface and an optical interface. This is a major problem, since both mechanical and optical design constraints must be taken into account in their manufacture, and not only for one coupling position, but for all those that they may adopt along the angular displacement allowed by the rotation of one with respect to the other.

Furthermore, in the lighting device of US2004208016A1, the illumination provided is not homogeneous as it emits light only at the focal points where the modules are coupled together, thus creating a multi-point illumination effect.

It is therefore necessary to offer an alternative that solves the gaps in the prior art by providing a lighting device that does not suffer from the known drawbacks, in particular those suffered by the lighting device disclosed by US2004208016A1.

US 2011/0038178 A1 discloses a lighting device comprising the features recited in the preamble of claim 1.

### Explanation of the invention

The invention is set forth in the appended claims.

### Brief description of the drawings

The above and other advantages and characteristics will be more fully understood from the following detailed description of some examples of embodiment with reference to the attached drawings, which should be taken for illustrative and not limitative purposes, in which:
Figure 1 is a front perspective view of a lighting module of the lighting device proposed by the present invention, for a first example of embodiment.
Figure 2 is another front perspective view of the lighting module of figure 1, from a different viewpoint.
Figure 3 is a rear perspective view of the lighting module of figure 1.
Figure 4 is another rear perspective view of the lighting module of figure 1, taken from a different viewpoint than in figure 3.
Figure 5 is another front perspective view of the lighting module of figure 1, in which the lighting module is located on an imaginary prism used to indicate the dimensions of the lighting module.
Figure 6 is another front elevation view of the lighting module of figure 1, together with two enlarged details of its first and second type coupling configurations.
Figure 7 is a front perspective view of three lighting modules as those of figure 1 coupled together, for an implementation of the lighting device of the present invention.
Figure 8 is a front perspective view of a lighting module of the lighting device proposed by the present invention, for a second example of embodiment.
Figure 9 is another front perspective view of the lighting module of figure 8, from a different viewpoint.
Figure 10 is a rear perspective view of the lighting module of figure 8.
Figure 11 is another rear perspective view of the lighting module of figure 8, taken from a different viewpoint than in figure 10.
Figure 12 is another front perspective view of the lighting module of figure 8, in which the lighting module is located on an imaginary prism used to indicate the dimensions of the lighting module.
Figure 13 is another front elevation view of the lighting module of figure 8, together with two enlarged details of its first and second type coupling configurations.
Figure 14 is a front perspective view of three lighting modules as those of figure 8 coupled together, for an implementation of the lighting device of the present invention.
Figure 15 is a front perspective view of a lighting module of the lighting device proposed by the present invention, for a third example of embodiment.
Figure 16 is another front perspective view of the lighting module of figure 15, from a different viewpoint.
Figure 17 is a rear perspective view of the lighting module of figure 15.
Figure 18 is another rear perspective view of the lighting module of figure 15, taken from a different viewpoint than in figure 17.
Figure 19 is another front elevation view of the lighting module of figure 15, together with two enlarged details of its first and second type coupling configurations.
Figure 20 is a front perspective view of three lighting modules as those of figure 15 coupled together, for an implementation of the lighting device of the present invention.
Figure 21 is a front perspective view of a lighting module of the lighting device proposed by the present invention, for a fourth example of embodiment, similar to the third example of embodiment.
Figure 22 is a rear perspective view of the lighting module of the lighting device of figure 21.
Figure 23 is a front perspective view of two lighting modules as that of figure 21 coupled together, with details of their first and second type coupling configurations.

### Detailed description of some examples of embodiment

Different examples of embodiments of the lighting device of the present invention are illustrated in the accompanying figures, all of which have in common that they include at least one lighting module comprising:
- a light guide G comprising a light entry zone Ge, an internal light transmission zone Gt and a light exit zone Gs, optically connected along an optical path; and
- a coupling configuration of a first type C1 and a coupling configuration of a second type C2, which is complementary to the coupling configuration of a first type C1, for coupling at least one adjacent lighting module Ma comprising at least one of said coupling configurations of a first type C1 or a second type C2, wherein the coupling configurations of a first type C1 and a second type C2 are arranged at locations of the lighting module M distant from the light entry zone Ge of the light guide G.

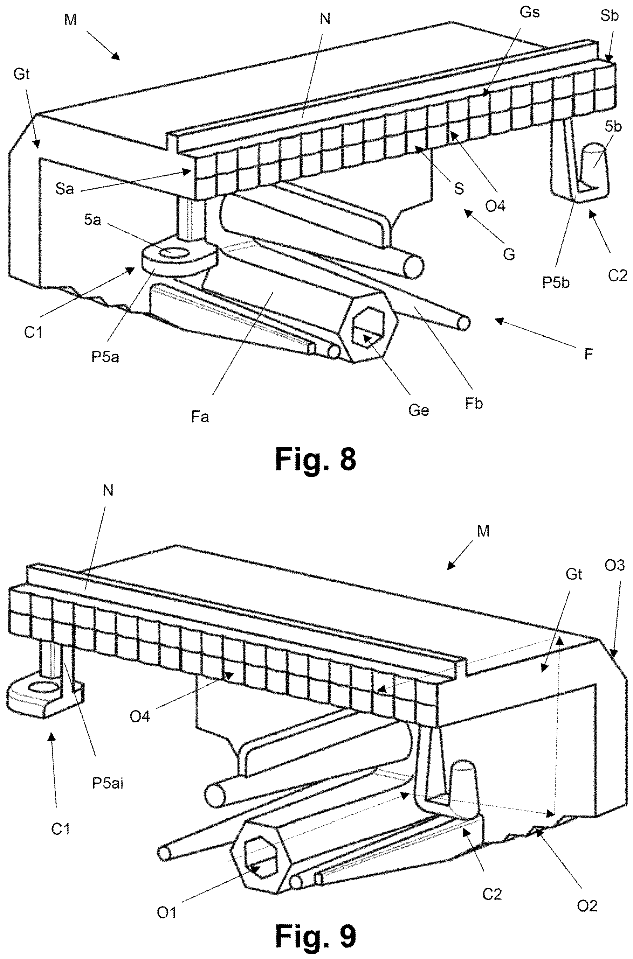

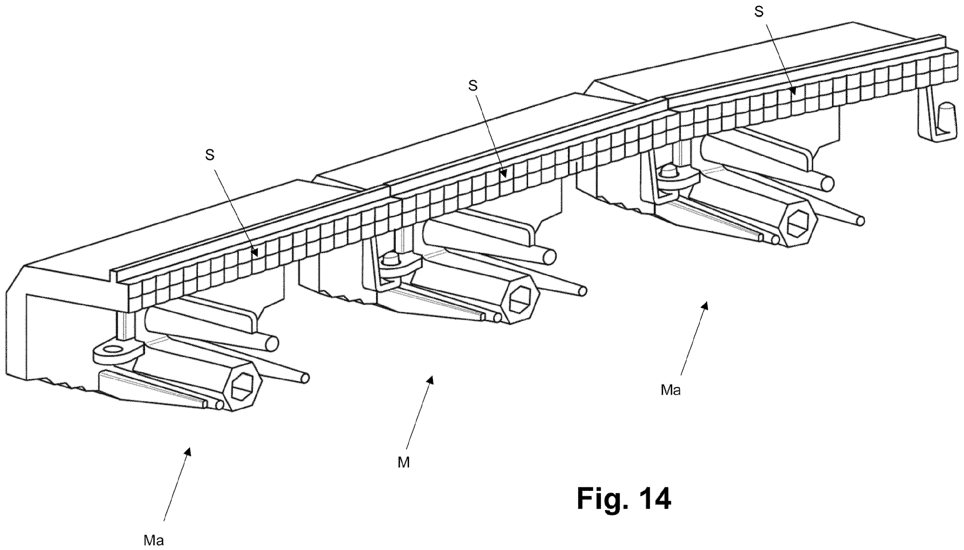

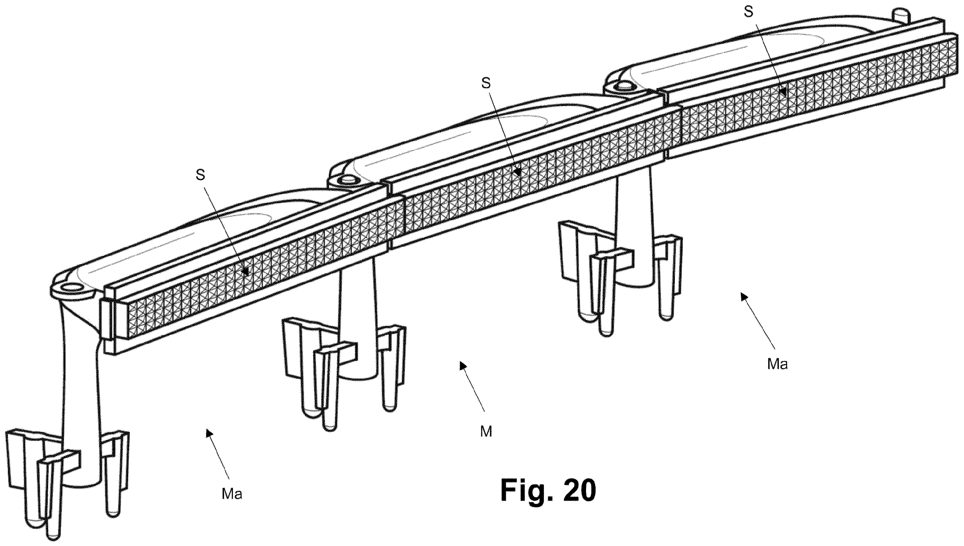

In the second, third and fourth embodiments, i.e., those illustrated in figures 8 to 23, the coupling configurations of a first C1 and a second C2 type are arranged at locations of the lighting module M where they do not interfere with said optical path, and where they do not interfere with the light exit zone Gs of the light guide G.

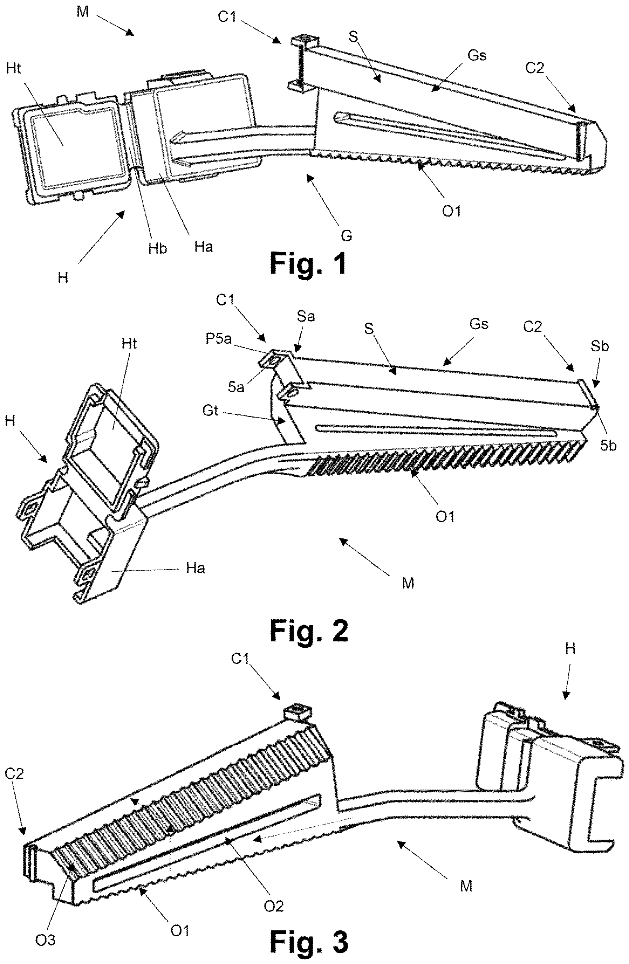

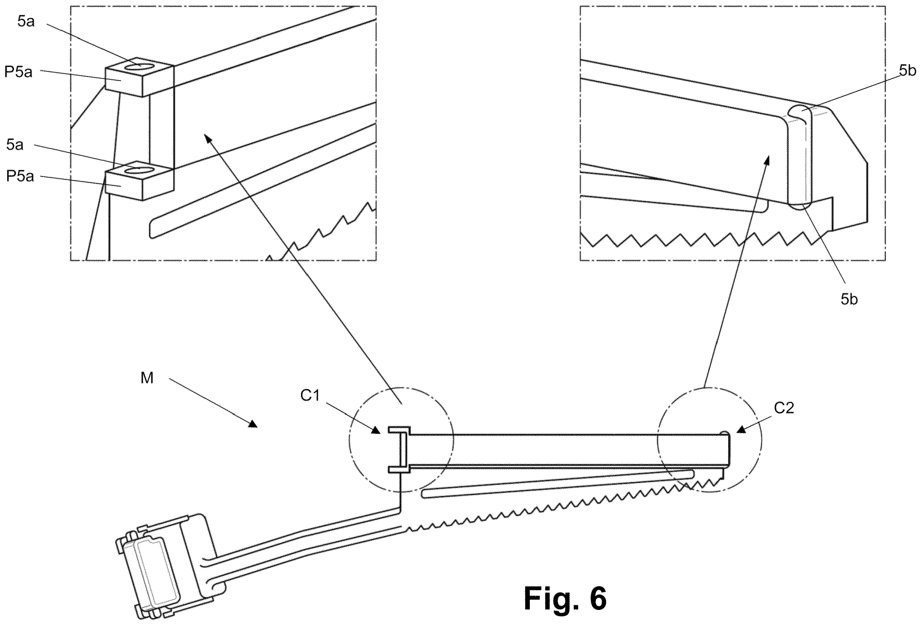

Instead, for the first example of embodiment, i.e., that of figures 1 to 8, one of the coupling configurations, in particular that of a second type C2 comprising projections 5b, is slightly interposed in the area of the section of the said optical path towards the light exit area Gs of the light guide G, in an area close to the same, as can be seen in detail in Figure 6. In any event, in order to guarantee homogeneity and optimum light transmission inside the light guide G, the projections 5b are also light transmitters, allowing light to pass towards the exit surface S, which will be described below.

A variant of said first example of embodiment for which there is no such interference is also covered by the present invention. This could be realised, for example, by only arranging the projections 5b at the locations depicted in figure 6, i.e., protruding above and below the elongate light exit surface S, but not including the cylindrical portion joining them which is now partially embedded in the light guide G. The body of the light guide G communicating said projections 5b is homogeneous with the areas of the adjacent light guides G, so that there are no internal reflections of light beams.

For all embodiments illustrated in the attached Figures, the locations of the lighting module M are coincident with and/or adjacent to the respective first and second regions of the outer contour of the light guide G, and the light exit zone Gs comprises an elongate light exit surface S extending in a longitudinal direction between the first Sa and second Sb opposite ends, which constitute said first and second regions of the outer contour of the light guide G.

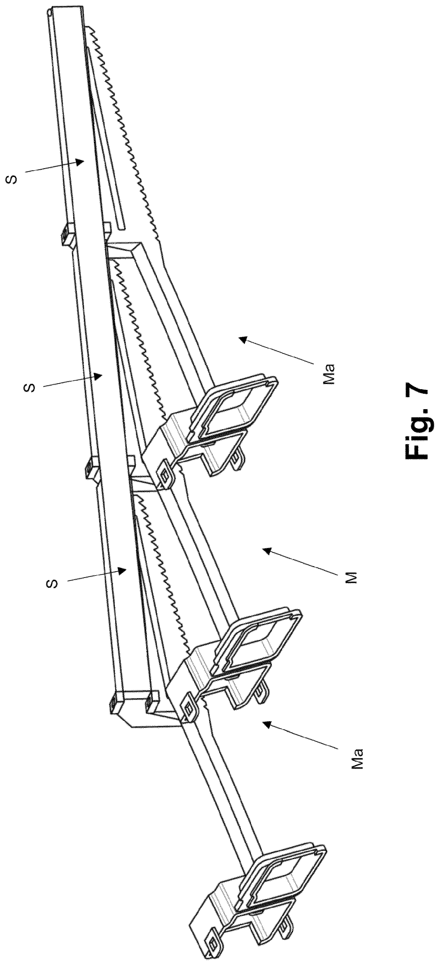

Also for all illustrated embodiments, the coupling configurations of a first C1 and a second C2 type comprise respectively at least one opening 5a and at least one protrusion 5b configured to fit, respectively, into a protrusion 5b and an opening 5a of respective adjacent lighting modules Ma, illustrated in figures 7, 14, 20, and 23.

In particular, for the first example of embodiment, the coupling configurations of a first C1 and a second C2 type comprise respectively two openings 5a and two protrusions 5b, whereas for the second, third and fourth examples of embodiment they only comprise one opening 5a and one protrusion 5b.

Also for all illustrated embodiments, the opening 5a is a through hole 5a (although it could be a blind hole for non-illustrated variants) which is defined in a flange P5a extending from said first region of the outer contour of the light guide G or from the free end of an intermediate portion P5ai extending from said first region of the outer contour of the light guide G, and the protrusion 5b extends along a longitudinal axis from the second region of the outer contour of the light guide G or from the free end of an intermediate portion P5b extending from the outer contour of the light guide G, wherein said longitudinal axis is parallel to the geometrical axis of said opening 5a, which in turn is orthogonal to the longitudinal direction along which the elongate light exit surface S extends.

In particular, as regards the first example of embodiment, as seen in particular in the enlarged detail on the left in figure 6, each of the two openings 5a is an orifice defined in a respective flange P5a, both of which extend from locations adjacent to the first end Sa of the elongated light exit surface S; in this case, according to the position illustrated by the central view of figure 6, both flanges P5a extend to the left from locations arranged adjacent to but slightly behind the elongate light exit surface S, and one of them slightly above and the other slightly below the elongate light exit surface S.

As regards the protrusions 5b, for the first example of embodiment, as can be seen in particular in the enlarged detail on the right in figure 6, each of the two protrusions 5b has a spherical cap shape extending, according to the position illustrated by the central view in figure 6, one upwards and the other downwards from respective locations adjacent to the second end Sb of the elongate light exit surface S, which in this case are arranged slightly behind the elongate light exit surface S.

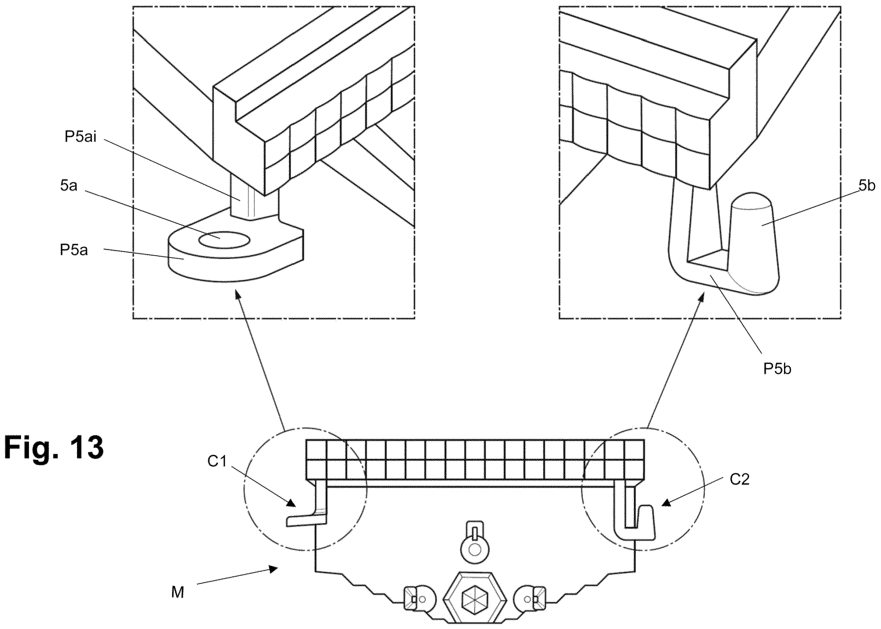

With regard to the second example of embodiment, as seen in particular in the enlarged detail on the left in figure 13, the single opening 5a is a hole which is defined in a respective flange P5a extending from a location adjacent to the first end Sa of the elongate light exit surface S; in this case, according to the position illustrated by the central view of figure 13, the flange P5a extends to the left from the free end of an intermediate portion or arm P5ai which in turn extends downwards from a location adjacent to the first end Sa of the elongate light exit surface S, in this case, from an adjacent location arranged below and slightly behind the elongate light exit surface S.

Similarly, in the second example of embodiment, as regards the single protrusion 5b, as can be seen in particular in the enlarged detail on the right in figure 13, this has a conical shape and extends, according to the position illustrated by the central view of figure 13, upwards from the free end of an L-shaped intermediate portion P5b extending downwards from a location adjacent to the second end Sb of the elongated light exit surface S, in this case, from an adjacent location disposed below and slightly behind the elongate light exit surface S.

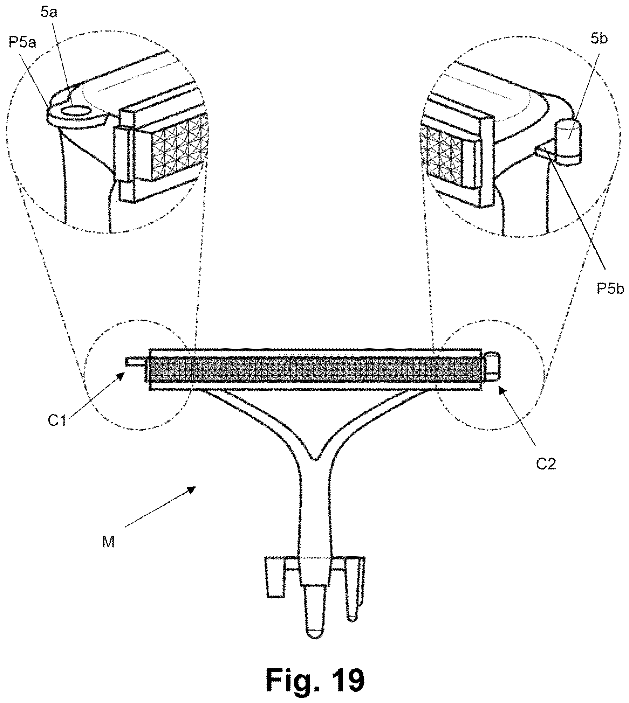

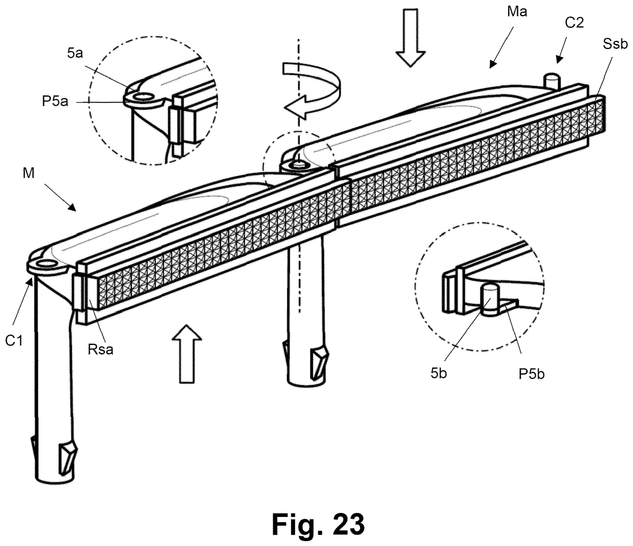

For the third and fourth embodiments, as seen in particular in the enlarged details on the left of figures 19 and 23, the single opening 5a is an orifice made in a respective flange P5a extending from a location adjacent to the first end Sa of the elongate light exit surface S; in this case, according to the position illustrated by the central view of figures 19 and 23, the tab P5a extends to the left from a location arranged adjacent to but behind the elongate light exit surface S.

With respect to the single projection 5b, for the third and fourth embodiments, as can be seen in particular in the enlarged detail on the right in figures 19 and 23, this has a cylindrical or slightly conical shape and extends, according to the position illustrated by the central view of figures 19 and 23, upwards from the free end of an intermediate portion P5b extending to the right from a location adjacent to the second end Sb of the elongate light exit surface S, in this case, from an adjacent location arranged behind the elongate light exit surface S.

As can be seen in particular in figures 13, 19 and 21, according to the position of the lighting module M illustrated therein, the flanges P5a are located in a plane above the plane from which the protrusions 5b extend upwards.

The same can be said with respect to the upper flange P5a and the protrusion 5b of the first embodiment, for which the reverse situation occurs for the lower flange P5a and the protrusion 5b, i.e., that lower flange P5a is in a plane below the plane from which the lower protrusion 5b extends upwards.

In all embodiments, the coupling configurations of a first type C1 and a second type C2 allow a freely rotatable coupling between the lighting module M and the adjacent lighting module Ma coupled thereto, to rotate relative to each other about a rotational axis along a given angular displacement. This aspect can be seen in figures 7, 14, 20 and 23, where several modules M, Ma are coupled to each other slightly angularly displaced along said axis of rotation, to form a curve-shaped arrangement of lighting modules M, Ma, and in particular a total light output surface formed by the elongated light output surfaces S of the consecutively arranged modules M, Ma, or to achieve a good fit between the modules in order to compensate for manufacturing tolerances.

Figure 23 illustrates by means of two vertical arrow lines pointing in opposite directions the relative movement that is carried out between the modules M, Ma to couple them together by inserting the protrusion 5b in the orifice 5a, as well as, by means of a circular arrow line, the aforementioned rotation, in this case around the axis E illustrated therein, which can be carried out once said coupling has taken place.

In particular, said figures 7, 14, 20 and 23 show how the modules M, Ma illustrated therein are coupled together in such a way that their respective elongate light-emitting surfaces S form a continuous illuminated surface, by placing in contact the first end Sa of the elongate light surface of the module M with the second end Sb of the elongate light surface S of the adjacent lighting module Ma arranged to its right (according to the position illustrated in figures 7, 14, 20 and 23), and, for the examples of embodiments of figures 7, 14 and 20, by placing in contact the second end Sb of the elongate light surface of the module M with the first end Sa of the elongate light surface S of the adjacent light module Ma arranged to its left.

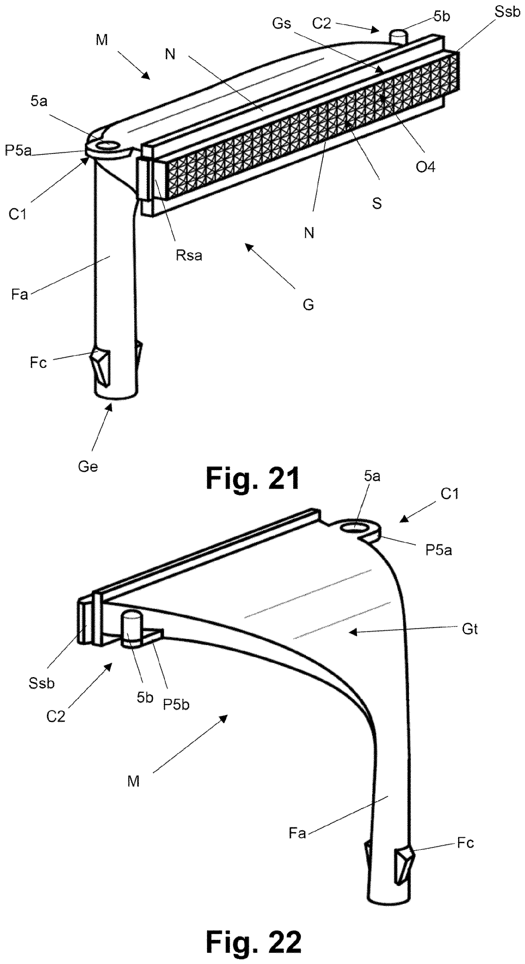

For the fourth example of embodiment, the continuity achieved in the continuous illuminated surface is even greater than for the other examples of embodiments since, as can be seen in figures 21, 22 and 23:
- the second end Sb of the elongate light exit surface S includes a protruding portion Ssb configured to engage with a recessed portion Rsa defined adjacent to a first end Sa of an elongate light exit surface S of an adjacent lighting module Ma, such that the protruding portion Ssb contacts the first end Sa of the elongate light exit surface S of the adjacent lighting module Ma for all possible positions along the aforementioned specified angular displacement; and
- the first end Sa of the elongate light exit surface S includes a recessed portion Rsa equal to the recessed portion Rsa of the adjacent lighting module Ma, to engage with a protruding portion Ssb, equal to said protruding portion Ssb, which is included in a second end Sb of an elongate light exit surface S of an adjacent lighting module Ma, such that the recessed portion Rsa contacts the second end Sb of the elongate light exit surface S of the adjacent lighting module Ma for all adoptable positions along said specified angular displacement.

Obviously, in order for the continuity on the illuminated surface to benefit from such recessed portions Rsa and protrusions Sds, these and the light guide G as a whole must be designed and configured in such a way that the light reaches them.

The configuration of the recessed portions Rsa and protrusions Ssb can also be incorporated in non-illustrated variants of the first, second and third examples of embodiments.

As can be seen from figures 7, 14, 20 and 23, an external observer would see an elongate illuminated surface, as if it were a light-emitting surface of a single body. The generation of this elongated light-emitting surface as a combination of several light-emitting surfaces Gs of a number of lighting modules M has the advantage of avoiding complex mathematical calculations in the dimensioning of the elongate light guides and their respective optics to achieve a high degree of homogeneity over the entire surface to be illuminated.

For the second third and fourth illustrated embodiments, each lighting module M, Ma, has one or two ribs N projecting from one or two respective locations on the contour of the light guide G slightly behind the elongate light exit surface S. The purpose of such ribs N is to place the light guide G inside a protective casing (not illustrated) of the lighting device.

In all embodiments, the light passing through the respective light guides G is sufficiently scattered so as to be spread over all the elongated illuminating surfaces S by a number of internal reflecting and/or scattering and/or diffusing surfaces.

For this purpose, in all illustrated embodiments, their respective light guide G comprises optical configurations arranged in one or more of the light input zones Ge, internal transmission zones Gt or output zones Gs and/or at another point of said optical path, for reflection and/or scattering and/or diffusion of the light beams introduced by the light source.

In particular, with regard to the first example of embodiment, as shown in figure 3, where the direction of the light beams is indicated by dashed arrow lines, such optical configurations are as follows:
- Reflecting optics O1, allowing the beams to be distributed over the entire width of the elongate light exit surface S.
- Opening O2 for diffusion and scattering of the light beams. Some of the light beams reflected internally in O1 pass through O2, while others bounce off the first side of the opening O2 back to O1. This results in an increased scattering of the light beams.
- Reflecting surface or optics O3 directing the light beams towards the elongate light exit surface S, which, although not the case illustrated, may also have optics or etchings to increase the homogeneity of the light.

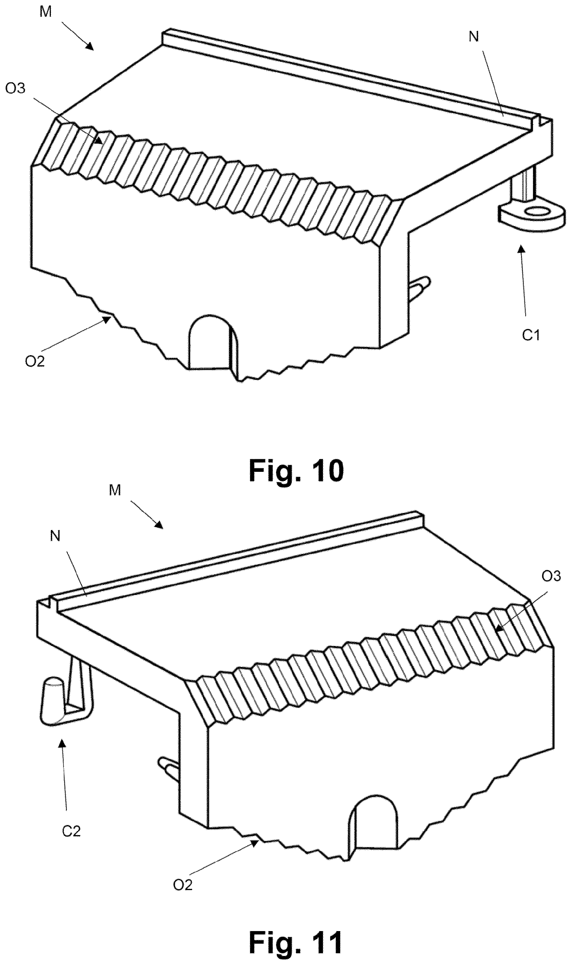

With regard to the second example of embodiment, as shown in figure 9 (and figure 10), where the direction of the light beams is indicated by dashed arrow lines, such optical configurations are as described below:
- The light emitted by the light source enters the inner hexagonal channel defining the tubular element Fa, which has an optics O1 at the entrance surface to scatter the light beams, and another optics (not shown) at the other end to direct the light beams towards the next inner reflection surface O2.
- Optics or internal reflecting surface O2, which allows the beams to be distributed over the entire elongate light exit surface S.
- Optics or reflecting surface O3, which directs the light beams towards the elongate light exit surface S.
- Elongate light exit surface S, which in this case has etchings or optics O4 to increase the homogeneity of the light.

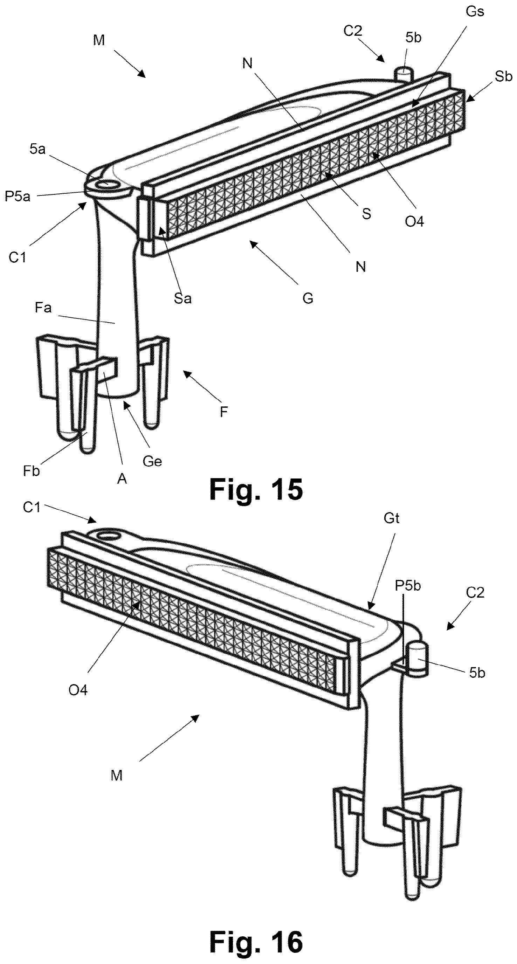

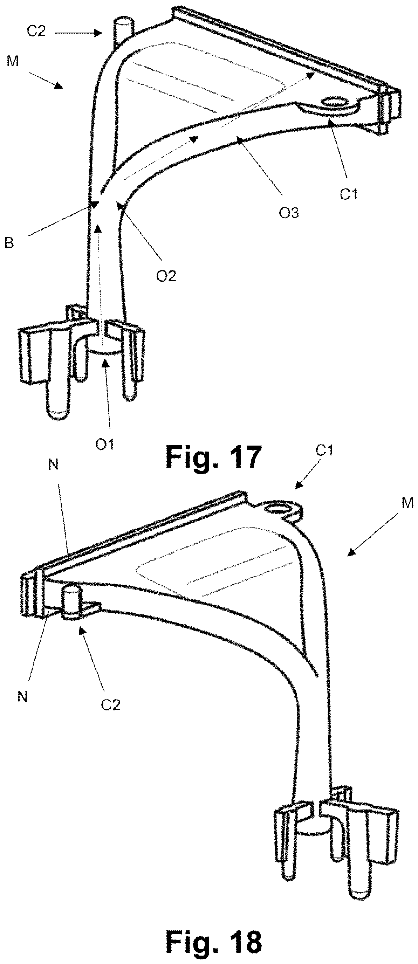

As regards the third example of embodiment, as shown in figure 17 (and figure 16), in which the direction of the light beams is also indicated by dashed arrow lines, such optical configurations are as follows:
- The light emitted by the light source enters the conduction channel defined by tubular element Fa, which has an internal optics (the location of which is indicated as O1) on the surface of the light entry zone Ga to scatter the light beams towards the zone. The channel has a bifurcation B at the other end which includes an internal optics (location shown as O2) to direct the light beams into the internal transmission zone Gt.
- Optics or reflecting surface O3, which directs the light beams towards the elongate light exit surface S.
- Elongate light exit surface S, which in this case has etchings or optics O4 to increase the homogeneity of the light.

As regards the fourth example of embodiment, a variant of same includes identical or similar optical configurations as the third example of embodiment.

In the illustrated embodiments, each of the lighting modules M and the adjacent lighting modules Ma includes or is at least configured to receive light from at least one light source (not illustrated) configured and arranged to introduce light beams into the light input zone Ge of said light guide G. Thus, the light from a lighting module M is not optically communicated with an adjacent lighting module Ma, but is optically transferred from the light input zone Ge to the light output zone Gs. It is noted that the light input zone Ge of a lighting module M is not connected to the light output zone Gs of an adjacent lighting module Ma.

Also, in the illustrated embodiments, each of the lighting modules M and adjacent lighting modules Ma includes or is at least configured to carry a printed circuit board (not illustrated) with electrical/electronic circuitry, to which the at least one light source (such as an LED) is mechanically and electrically connected, and comprises elements F for positioning and fixing the printed circuit board and the light source so that the light source is arranged to introduce light beams into the light entry zone Ge of the light guide G.

In the first example of embodiment, as shown in figures 1 to 7, each lighting module M and adjacent lighting module Ma comprises a casing H which includes a housing Ha for the printed circuit board and light source, and which includes a hinged cover Ht (for example by means of a film hinge Hb) for closing the housing Ha. As can be seen in figure 4, from a back wall of the housing Ha, positioning and fixing elements F for both the printed circuit board and the light source of the light source extend from the protrusion Fd and from a small portion or tubular element Fa surrounding a hole in which to insert at least part of the light source, and which therefore constitutes the light entry zone Ge.

In the second example of embodiment, as shown in figures 8 to 14, the positioning and fixing elements F comprise a series of conical shaped arms Fb extending from a wall of the internal transmission zone Gt of the light guide G, the purpose of which is to be inserted into respective through holes of the printed circuit board (and optionally soldered to the same) in order to centre and fix the same. Such positioning and fixing elements F also comprise a tubular element Fa, at least partially hollow, which also extends from the same wall and whose purpose is to receive inside its end portion at least part of the light source, such end portion of the tubular element Fa constituting therefore the light entry zone Ge.

Similarly, in the third embodiment and as shown in figures 15 to 20, the positioning and fixing elements F also comprise a series of conical shaped arms Fb and a tubular element Fa, for the same purpose as those of the second embodiment, but with the difference that in this case the tubular element Fa extends from a converging portion of the inner transmission zone Gt of the light guide G, and the arms Fb extend parallel to the tubular element Fa from respective appendages A extending radially from the outer contour of the tubular element Fa.

For the fourth embodiment, the positioning and fixing elements F comprise a tubular element Fa similar to that of the third embodiment, lacking the arms Fb but having a pair of protrusions Fc extending radially from the outer contour of the tubular element Fa.

In the illustrated embodiments, the light guide G and the coupling configurations of a first C1 and a second C2 type are part of the same one-piece body, of which the positioning and fixing elements F and, where applicable, the housing H are also part.

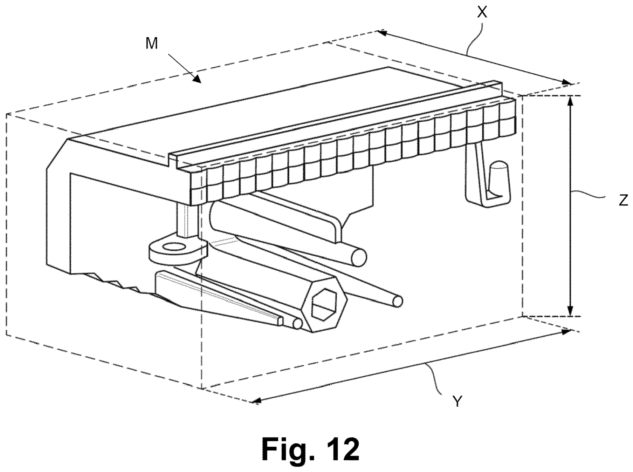

Finally, figures 5 and 12 show dimensions of the lighting module of the present invention for the first and second embodiments of two corresponding prototypes manufactured by the present inventors.

In particular, with regard to the first embodiment, X = 39.5 mm, Y = 117 mm and Z = 37.5 mm, and with regard to the second embodiment, X = 26.5 mm, Y = 45 ÷ 70 mm and Z = 23 mm.

Such dimensions are obviously to be taken in a non-limiting manner, and are provided herein only as examples of implementations which have been carried out in practice of such first and second examples of embodiments of the lighting device of the present invention.

### List of references in the figures:

M: Lighting module
Ma: Adjacent lighting module
G: Light guide
Ge: Light entry zone
Gt: Internal light transmission zone
Gs: Light exit zone
C1: Coupling configuration of the first type
5a: Opening of C1
P5a: Flange in which 5a is defined
C2: Coupling configuration of a second type
5b: Protrusion of C2
P5b: Intermediate portion from which 5b extends
S: Elongate light exit surface
Sa: First end of S
Rsa: Recessed portion of Sa
Sb: Second end of S
Ssb: Protruding portion of Sb
F: Positioning and fixing elements
Fa: Tubular element
Fb: Arms
Fc: Protrusions
Fd: Protrusion
A: Appendages
H: Casing
Ha: Housing of H
Ht: Cover of H
Hb: Film hinge
B: Bifurcation
N: Ribs

A person skilled in the art could make changes and modifications to the examples of embodiment described without going beyond the scope of the invention as defined in the attached claims.

## Claims

1. Lighting device comprising at least one lighting module (M) which in turn comprises:
- a light guide (G) comprising a light entry zone (Ge), an internal light transmission zone (Gt) and a light exit zone (Gs), optically communicating with each other along an optical path; and
- a coupling configuration of a first type (C1) and a coupling configuration of a second type (C2), which is complementary to said coupling configuration of a first type (C1), for coupling at least one adjacent lighting module (Ma) comprising at least one of said coupling configurations of a first (C1) or a second (C2) type;
wherein said coupling configurations of a first (C1) and a second (C2) type are arranged at locations of the lighting module (M) distant from said light entry zone (Ge) of the light guide (G);and
wherein said light guide (G) and said coupling configurations of a first type (C1) and of a second type (C2) form part of the same one-piece body;
**characterized in that** the coupling configurations of a first (C1) and a second (C2) type allow a freely rotatable coupling between said lighting module (M) and said at least one adjacent lighting module (Ma), to rotate relative to each other about a rotational axis along a specified angular displacement.

2. Lighting device according to claim 1, wherein the coupling configurations of a first (C1) and a second (C2) type are arranged at locations on the lighting module (M) where they do not interfere with said optical path.

3. Lighting device according to claim 1 or 2, wherein the coupling configurations of a first (C1) and a second (C2) type are arranged at locations on the lighting module (M) where they do not interfere with the light exit area (Gs) of the light guide (G).

4. Lighting device according to claim 1, 2 or 3, wherein said locations of the lighting module (M) are coincident with and/or adjacent to respective first and second regions of the outer contour of said light guide (G).

5. Lighting device according to claim 1, 2, 3 or 4, wherein the coupling configurations of a fist type (C1) and a second type (C2) respectively comprise at least one opening (5a) and at least one protrusion (5b) configured to fit, respectively, in a protrusion (5b) and an opening (5a) of respective adjacent lighting modules (Ma).

6. Lighting device according to claim 5, wherein at least one of said openings (5a) and said protrusions (5b) is a centring element configured to centre the same with respect to the protrusion (5b) or opening (5a) of the adjacent lighting module (Ma) to be coupled, during the coupling operation.

7. Lighting device according to claim 5 or 6, when depending on claim 3, wherein said opening (5a) is an orifice (5a) made in a flange (P5a) extending from said first region of the outer contour of the light guide (G) or from the free end of an intermediate portion (P5ai) extending from said first region of the outer contour of the light guide (G).

8. Lighting device according to claim 7, when depending on 5, wherein said protrusion (5b) extends along at least one longitudinal axis from said second region of the outer contour of the light guide (G) or from the free end of an intermediate portion (P5b) extending from said second region of the outer contour of the light guide (G), wherein said longitudinal axis is parallel to the geometrical axis of said orifice (5a).

9. Lighting device according to claim 4 or any one of claims 5 to 8 when depending on claim 4, wherein said light exit zone (Gs) comprises an elongate light exit surface (S) extending in a longitudinal direction between said first (Sa) and second (Sb) opposite ends, which constitute said first and second regions of the outer contour of the light guide (G).

10. Lighting device according to claim 9 when depending on claim 8, wherein said geometrical axis of the orifice (5a) is orthogonal to said longitudinal direction.

11. Lighting device according to claim 9 or 10, wherein:
- said second end (Sb) of the elongate light exit surface (S) includes a protruding portion (Ssb) configured to engage a recessed portion (Rsa) defined adjacent to a first end (Sa) of an elongate light exit surface (S) of an adjacent lighting module (Ma), so that said protruding portion (Ssb) contacts the first end (Sa) of said elongate light exit surface (S) of the adjacent lighting module (Ma) for all possible positions along said specified angular displacement; and
- said first end (Sa) of the elongate light exit surface (S) includes a recessed portion (Rsa) identical to said recessed portion (Rsa) of the adjacent lighting module (Ma), to engage a protruding portion (Ssb), identical to said protruding portion (Ssb), which is included in a second end (Sb) of an elongate light exit surface (S) of an adjacent lighting module (Ma), so that said recessed portion (Rsa) contacts the second end (Sb) of said elongate light exit surface (S) of said adjacent lighting module (Ma) for all possible positions along said specified angular displacement.

12. Lighting device according to any one of the preceding claims, wherein said lighting module (M) further comprises:
- at least one light source configured and arranged to introduce light beams into said light entry zone (Ge) of said light guide (G);
- a printed circuit board with electrical/electronic circuitry, to which said at least one light source is mechanically and electrically connected;
- elements (F) for positioning and fixing said printed circuit board and said at least one light source so that the at least one light source is arranged for said introduction of light beams into the light entry zone (Ge) of the light guide (G); and
- a casing (H) for housing said printed circuit board.

13. Device according to claim 12, wherein said positioning and fixing elements (F) and/or said casing (H) form part of said one-piece body.

14. Lighting device according to any one of the preceding claims, further comprising said adjacent lighting module (Ma), which is defined according to said lighting module (M) and is coupled thereto by its coupling configuration of a first type (C1) or a second type (C2).

15. Lighting device according to claim 14 when depending on 9, 10 or 11, wherein the lighting module (M) and the adjacent lighting module (Ma) are coupled to each other so that their respective elongate light output surfaces (S) form a continuous illuminated surface.

16. Lighting device according to claim 15, wherein said continuous illuminated surface is formed by contacting the first end (Sa) of the elongate light surface of the lighting module (M) with the second end (Sb) of the elongate light surface of the adjacent lighting module (Ma), or vice versa.

17. Lighting device according to any one of claims 14 to 16 , wherein said adjacent lighting module (Ma) is a first adjacent lighting module (Ma), where the lighting device further comprises a second adjacent lighting module (Ma), which is defined according to said lighting module (M) and is coupled thereto by the coupling configuration of a second type (C2) or a first type (C1) type in which the first adjacent lighting module (Ma) is not coupled.

## Patentansprüche

1. Beleuchtungsvorrichtung, umfassend mindestens ein Beleuchtungsmodul (M), das seinerseits umfasst:
- einen Lichtleiter (G), der eine Lichteintrittszone (Ge), eine interne Lichtübertragungszone (Gt) und eine Lichtaustrittszone (Gs) umfasst, die entlang eines Lichtwegs optisch miteinander kommunizieren; und
- eine Kopplungskonfiguration eines ersten Typs (C1) und eine Kopplungskonfiguration eines zweiten Typs (C2), die komplementär zur Kopplungskonfiguration eines ersten Typs (C1) ist, zum Koppeln mindestens eines benachbarten Beleuchtungsmoduls (Ma), das mindestens eine der Kopplungskonfigurationen eines ersten (C1) oder eines zweiten (C2) Typs umfasst;
wobei die Kopplungskonfigurationen eines ersten (C1) oder eines zweiten (C2) Typs an Stellen des Beleuchtungsmoduls (M) entfernt von der Lichteintrittszone (Ge) der Lichtleiters (G) angeordnet sind;
wobei der Lichtleiter (G) und die Kopplungskonfigurationen eines ersten (C1) oder eines zweiten (C2) Typs zum gleichen einstückigen Körper gehören;
**dadurch gekennzeichnet, dass** die Kopplungskonfigurationen eines ersten (C1) oder eines zweiten (C2) Typs eine frei drehbare Kopplung zwischen dem Beleuchtungsmodul (M) und dem mindestens einen benachbarten Beleuchtungsmodul (Ma) ermöglichen, damit sie sich relativ zueinander um eine Drehachse entlang einer spezifizierten Winkelverschiebung drehen.

2. Beleuchtungsvorrichtung nach Anspruch 1, wobei die Kopplungskonfigurationen eines ersten (C1) oder eines zweiten (C2) Typs an Stellen auf dem Beleuchtungsmodul (M) angeordnet sind, wo sie die den Lichtweg nicht beeinträchtigen.

3. Beleuchtungsvorrichtung nach Anspruch 1 oder 2, wobei die Kopplungskonfigurationen eines ersten (C1) oder eines zweiten (C2) Typs an Stellen auf dem Beleuchtungsmodul (M) angeordnet sind, wo sie den Lichtaustrittsbereich (Gs) des Lichtleiters (G) nicht beeinträchtigen.

4. Beleuchtungsvorrichtung nach Anspruch 1, 2 oder 3, wobei die Stellen des Beleuchtungsmoduls (M) mit jeweiligen ersten und zweiten Regionen der Außenkontur des Lichtleiters (G) zusammenfallen und/oder benachbart dazu sind.

5. Beleuchtungsvorrichtung nach Anspruch 1, 2, 3 oder 4, wobei die Kopplungskonfigurationen eines ersten (C1) oder eines zweiten (C2) Typs jeweils mindestens eine Öffnung (5a) und mindestens einen Vorsprung (5b) umfassen, die so ausgelegt sind, dass sie in einen Vorsprung (5b) bzw. eine Öffnung (5a) jeweiliger benachbarter Beleuchtungsmodule (Ma) passen.

6. Beleuchtungsvorrichtung nach Anspruch 5, wobei mindestens eine/r der Öffnungen (5a) und der Vorsprünge (5b) ein Zentrierelement ist, das so ausgelegt ist, dass es dieselben in Bezug auf den Vorsprung (5b) oder die Öffnung (5a) des benachbarten Beleuchtungsmoduls (Ma) zentriert, das während des Kopplungsvorgangs gekoppelt werden soll.

7. Beleuchtungsvorrichtung nach Anspruch 5 oder 6, wenn von Anspruch 3 abhängig, wobei die Öffnung (5a) ein Loch (5a) ist, das in einem Flansch (P5a) hergestellt ist, der sich von der ersten Region der Außenkontur des Lichtleiters (G) oder vom freien Ende eines Zwischenabschnitts (P5ai) erstreckt, der sich von der ersten Region der Außenkontur des Lichtleiters (G) erstreckt.

8. Beleuchtungsvorrichtung nach Anspruch 7, wenn von Anspruch 5 abhängig, wobei der Vorsprung (5b) sich entlang mindestens einer Längsachse von der zweiten Region der Außenkontur des Lichtleiters (G) oder vom freien Ende eines Zwischenabschnitts (P5b) erstreckt, der sich von der zweiten Region der Außenkontur des Lichtleiters (G) erstreckt, wobei die Längsachse parallel zur geometrischen Achse des Lochs (5a) ist.

9. Beleuchtungsvorrichtung nach Anspruch 4 oder einem der Ansprüche 5 bis 8, wenn von Anspruch 4 abhängig, wobei die Lichtaustrittszone (Gs) eine längliche Lichtaustrittsfläche (S) umfasst, die sich in einer Längsrichtung zwischen dem ersten (Sa) und dem zweiten (Sb) gegenüberliegenden Ende erstreckt, welche die erste und die zweite Region der Außenkontur des Lichtleiters (G) bilden.

10. Beleuchtungsvorrichtung nach Anspruch 9, wenn von Anspruch 8 abhängig, wobei die geometrische Achse des Lochs (5a) orthogonal zur Längsrichtung ist.

11. Beleuchtungsvorrichtung nach Anspruch 9 oder 10, wobei:
- das zweite Ende (Sb) der länglichen Lichtaustrittsfläche (S) einen vorstehenden Abschnitt (Ssb) umfasst, der zum Eingreifen in einen vertieften Abschnitt (Rsa) ausgelegt ist, der benachbart zu einem ersten Ende (Sa) einer Lichtaustrittsfläche (S) eines benachbarten Beleuchtungsmoduls (Ma) definiert ist, so dass der vorstehende Abschnitt (Ssb) mit dem ersten Ende (Sa) der länglichen Lichtaustrittsfläche (S) des benachbarten Beleuchtungsmoduls (Ma) für alle möglichen Positionen entlang der spezifizierten Winkelverschiebung in Kontakt tritt; und
- das erste Ende (Sa) der länglichen Lichtaustrittsfläche (S) einen vertieften Abschnitt (Rsa) umfasst, der mit dem vertieften Abschnitt (Rsa) des benachbarten Beleuchtungsmoduls (Ma) identisch ist, um mit einem vorstehenden Abschnitt (Ssb) in Eingriff gebracht zu werden, der mit dem vorstehenden Abschnitt (Ssb) identisch ist, der in einem zweiten Ende (Sb) einer länglichen Lichtaustrittsfläche (S) eines benachbarten Beleuchtungsmoduls (Ma) enthalten ist, so dass der vertiefte Abschnitt (Rsa) mit dem zweiten Ende (Sb) der länglichen Lichtaustrittsfläche (S) des benachbarten Beleuchtungsmoduls (Ma) für alle möglichen Positionen entlang der spezifizierten Winkelverschiebung in Kontakt tritt.

12. Beleuchtungsvorrichtung nach einem der vorhergehenden Ansprüche, wobei das Beleuchtungsmodul (M) ferner umfasst:
- mindestens eine Lichtquelle, die zum Einführen von Lichtstrahlen in die Lichteintrittszone (Ge) des Lichtleiters (G) ausgelegt und angeordnet ist;
- eine gedruckte Leiterplatte mit elektrischen/elektronischen Schaltungen, womit die mindestens eine Lichtquelle mechanisch und elektrisch verbunden ist;
- Elemente (F) zum Positionieren und Fixieren der gedruckten Leiterplatte und der mindestens einen Lichtquelle, damit die mindestens eine Lichtquelle zur Einführung von Lichtstrahlen in die Lichteintrittszone (Ge) des Lichtleiters (G) angeordnet ist; und
- ein Gehäuse (H) zum Unterbringen der gedruckten Leiterplatte.

13. Vorrichtung nach Anspruch 12, wobei die Positionier- und Fixierelemente (F) und/oder das Gehäuse (H) zum einstückigen Körper gehören.

14. Beleuchtungsvorrichtung nach einem der vorhergehenden Ansprüche, ferner umfassend das benachbarte Beleuchtungsmodul (Ma), das gemäß dem Beleuchtungsmodul (M) definiert und durch seine Kopplungskonfiguration eines ersten Typs (C1) oder eines zweiten Typs (C2) damit gekoppelt ist.

15. Beleuchtungsvorrichtung nach Anspruch 14, wenn von 9, 10 oder 11 abhängig, wobei das Beleuchtungsmodul (M) und das benachbarte Beleuchtungsmodul (Ma) so miteinander gekoppelt sind, dass ihre jeweiligen länglichen Lichtausgabeflächen (S) eine durchgehende beleuchtete Oberfläche bilden.

16. Beleuchtungsvorrichtung nach Anspruch 15, wobei die durchgehende beleuchtete Oberfläche dadurch gebildet wird, dass das erste Ende (Sa) der länglichen Lichtfläche des Beleuchtungsmoduls (M) mit dem zweiten Ende (Sb) der länglichen Lichtfläche des benachbarten Beleuchtungsmoduls (Ma) in Kontakt gebracht wird oder umgekehrt.

17. Beleuchtungsvorrichtung nach einem der Ansprüche 14 bis 16, wobei das benachbarte Beleuchtungsmodul (Ma) ein erstes benachbartes Beleuchtungsmodul (Ma) ist, wobei die Beleuchtungsvorrichtung ferner ein zweites benachbartes Beleuchtungsmodul (Ma) umfasst, das gemäß dem Beleuchtungsmodul (M) definiert und damit durch die Kopplungskonfiguration eines zweiten Typs (C2) oder eines ersten Typs (C1) gekoppelt ist, mit der das erste benachbarte Beleuchtungsmodul (Ma) nicht gekoppelt ist.

## Revendications

1. Dispositif d'éclairage comprenant au moins un module d'éclairage (M) qui comprend à son tour :
un guide de lumière (G) comprenant une zone d'entrée de lumière (Ge), une zone de transmission de lumière interne (Gt) et une zone de sortie de lumière (Gs), communiquant, par voie optique, entre elles le long d'une trajectoire optique ; et
une configuration de couplage d'un premier type (C1) et une configuration de couplage d'un second type (C2), qui est complémentaire de ladite configuration de couplage d'un premier type (C1), pour coupler au moins un module d'éclairage (Ma) adjacent comprenant au moins l'une desdites configurations de couplage d'un premier (C1) ou d'un second type (C2) ;
dans lequel lesdites configurations de couplage d'un premier (C1) et d'un second type (C2) sont agencées à des emplacements du module d'éclairage (M) à distance de ladite zone d'entrée de lumière (Ge) du guide de lumière (G) ; et
dans lequel ledit guide de lumière (G) et lesdites configurations de couplage d'un premier type (C1) et d'un second type (C2) font partie du même corps d'un seul tenant ;
**caractérisé en ce que** les configurations de couplage d'un premier (C1) et d'un second type (C2) permettent un couplage librement rotatif entre ledit module d'éclairage (M) et ledit au moins un module d'éclairage (Ma) adjacent, pour tourner l'un par rapport à l'autre autour d'un axe de rotation le long d'un déplacement angulaire spécifié.

2. Dispositif d'éclairage selon la revendication 1, dans lequel les configurations de couplage d'un premier (C1) et d'un second type (C2) sont agencées à des emplacements sur le module d'éclairage (M) où elles n'interfèrent pas avec ladite trajectoire optique.

3. Dispositif d'éclairage selon la revendication 1 ou 2, dans lequel les configurations de couplage d'un premier (C1) et d'un second type (C2) sont agencées à des emplacements sur le module d'éclairage (M) où elles n'interfèrent pas avec la zone de sortie de lumière (Gs) du guide de lumière (G).

4. Dispositif d'éclairage selon la revendication 1, 2 ou 3, dans lequel lesdits emplacements du module d'éclairage (M) coïncident avec et/ou sont adjacents aux première et seconde régions respectives du contour externe dudit guide de lumière (G).

5. Dispositif d'éclairage selon la revendication 1, 2, 3 ou 4, dans lequel les configurations de couplage d'un premier type (C1) et d'un second type (C2) comprennent respectivement au moins une ouverture (5a) et au moins une saillie (5b) configurées pour se monter, respectivement, dans une saillie (5b) et une ouverture (5a) des modules d'éclairage (Ma) adjacents respectifs.

6. Dispositif d'éclairage selon la revendication 5, dans lequel au moins l'une desdites ouvertures (5a) et desdites saillies (5b) est un élément de centrage configuré pour centrer cette dernière par rapport à la saillie (5b) ou à l'ouverture (5a) du module d'éclairage (Ma) adjacent à coupler, pendant l'opération de couplage.

7. Dispositif d'éclairage selon la revendication 5 ou 6, lorsqu'elle dépend de la revendication 3, dans lequel ladite ouverture (5a) est un orifice (5a) réalisé dans une bride (P5a) s'étendant à partir de ladite première région du contour externe du guide de lumière (G) ou à partir de l'extrémité libre d'une partie intermédiaire (P5ai) s'étendant à partir de ladite première région du contour externe du guide de lumière (G).

8. Dispositif d'éclairage selon la revendication 7, lorsqu'elle dépend de la revendication 5, dans lequel ladite saillie (5b) s'étend le long d'au moins un axe longitudinal à partir de ladite seconde région du contour externe du guide de lumière (G) ou à partir de l'extrémité libre d'une partie intermédiaire (P5b) s'étendant à partir de ladite seconde région du contour externe du guide de lumière (G), dans lequel ledit axe longitudinal est parallèle à l'axe géométrique dudit orifice (5a).

9. Dispositif d'éclairage selon la revendication 4 ou l'une quelconque des revendications 5 à 8, lorsqu'elle dépend de la revendication 4, dans lequel ladite zone de sortie de lumière (Gs) comprend une surface de sortie de lumière (S) allongée s'étendant dans une direction longitudinale entre lesdites première (Sa) et seconde (Sb) extrémités opposées, qui constituent lesdites première et seconde régions du contour externe du guide de lumière (G).

10. Dispositif d'éclairage selon la revendication 9 lorsqu'elle dépend de la revendication 8, dans lequel ledit axe géométrique de l'orifice (5a) est orthogonal à ladite direction longitudinale.

11. Dispositif d'éclairage selon la revendication 9 ou 10, dans lequel :
ladite seconde extrémité (Sb) de la surface de sortie de lumière (S) allongée comprend une partie en saillie (Ssb) configurée pour mettre en prise une partie enfoncée (Rsa) définie de manière adjacente à une première extrémité (Sa) d'une surface de sortie de lumière (S) allongée d'un module d'éclairage (Ma) adjacent, de sorte que ladite partie en saillie (Ssb) est en contact avec la première extrémité (Sa) de ladite surface de sortie de lumière (S) allongée du module d'éclairage (Ma) adjacent pour toutes les positions possibles le long dudit déplacement angulaire spécifié ; et
ladite première extrémité (Sa) de la surface de sortie de lumière (S) allongée comprend une partie enfoncée (Rsa) identique à ladite partie enfoncée (Rsa) du module d'éclairage (Ma) adjacent, pour mettre en prise une partie en saillie (Ssb), identique à ladite partie en saillie (Ssb) qui est comprise dans une seconde extrémité (Sb) d'une surface de sortie de lumière (S) allongée d'un module d'éclairage (Ma) adjacent, de sorte que ladite partie enfoncée (Rsa) est en contact avec la seconde extrémité (Sb) de ladite surface de sortie de lumière (S) allongée dudit module d'éclairage (Ma) adjacent pour toutes les positions possibles le long dudit déplacement angulaire spécifié.

12. Dispositif d'éclairage selon l'une quelconque des revendications précédentes, dans lequel ledit module d'éclairage (M) comprend en outre :
au moins une source de lumière configurée et agencée pour introduire des faisceaux de lumière dans ladite zone d'entrée de lumière (Ge) dudit guide de lumière (G) ;
une carte de circuit imprimé avec des circuits électriques/électroniques, à laquelle ladite au moins une source de lumière est mécaniquement et électriquement raccordée ;
des éléments (F) pour positionner et fixer ladite carte de circuit imprimé et ladite au moins une source de lumière de sorte que la au moins une source de lumière est agencée pour ladite introduction des faisceaux de lumière dans la zone d'entrée de lumière (Ge) du guide de lumière (G) ; et
un boîtier (H) pour loger ladite carte de circuit imprimé.

13. Dispositif selon la revendication 12, dans lequel lesdits éléments de positionnement et de fixation (F) et/ou ledit boîtier (H) font partie dudit corps d'un seul tenant.

14. Dispositif d'éclairage selon l'une quelconque des revendications précédentes, comprenant en outre ledit module d'éclairage (Ma) adjacent qui est défini selon ledit module d'éclairage (M) et y est couplé grâce à sa configuration de coulage d'un premier type (C1) ou d'un second type (C2).

15. Dispositif d'éclairage selon la revendication 14, lorsqu'elle dépend de la revendication 9, 10 ou 11, dans lequel le module d'éclairage (M) et le module d'éclairage (Ma) adjacent sont couplés entre eux de sorte que leurs surfaces de sortie de lumière (S) allongées respectives forment une surface éclairée continue.

16. Dispositif d'éclairage selon la revendication 15, dans lequel ladite surface éclairée continue est formée en mettant en contact la première extrémité (Sa) de la surface de lumière allongée du module d'éclairage (M) avec la seconde extrémité (Sb) de la surface de lumière allongée du module d'éclairage (Ma) adjacent ou vice versa.

17. Dispositif d'éclairage selon l'une quelconque des revendications 14 à 16, dans lequel ledit module d'éclairage (Ma) adjacent est un premier module d'éclairage (Ma) adjacent où le dispositif d'éclairage comprend en outre un second module d'éclairage (Ma) adjacent qui est défini selon ledit module d'éclairage (M) et y est couplé grâce à la configuration de couplage d'un second type (C2) ou d'un premier type (C1) dans lequel le premier module d'éclairage (Ma) adjacent n'est pas couplé.
